# FASCICULE DE BREVET EUROPEEN

(11) **EP 2 914 150 B1**
(45) Date de publication et mention de la délivrance du brevet: **17.07.2019**
(21) Numéro de dépôt: 13815022.2
(22) Date de dépôt: 28.10.2013
(51) Int. Cl.: A47J 37/04, A47J 37/06

(54) **APPAREIL DE CUISSON ELECTRIQUE A FLUX D'AIR**
ELEKTRISCHE KOCHVORRICHTUNG MIT EINEM LUFTSTROM
ELECTRIC COOKING APPARATUS HAVING AN AIR FLOW

(30) Priorité: 31.10.2012 FR 1260443
(43) Date de publication de la demande: 09.09.2015
(73) Titulaire: SEB S.A., 69130 Ecully (FR)
(72) Inventeur: DELRUE, Olivier, F-21260 Selongey (FR); MUGNIER, Cédric, F-21260 Selongey (FR); LE GRAND, Olivier, F-21380 Messigny et Vantoux (FR); GOVIN, Erwann, F-21260 Selongey (FR)
(74) Mandataire: Bourrières, Patrice
(86) Numéro de dépôt international: PCT/FR2013/052560
(87) Numéro de publication internationale: WO 2014/068225

(56) Documents cités:
- WO-A2-2006/000700
- WO-A2-2012/007681
- DE-A1- 2 102 062
- US-A- 5 588 353

## Description

La présente invention concerne de manière générale un appareil de cuisson électrique, et en particulier un appareil agencé pour cuire des aliments avec un flux d'air chaud.

Il est connu dans l'art antérieur des dispositifs de cuisson sèche utilisant un flux d'air chaud. Ainsi, le document WO2006000700A2 décrit un appareil de cuisson comprenant un circuit de ventilation incluant une résistance chauffante. Cependant, les temps de cuisson dans ce type d'appareil pour garantir l'établissement d'une réaction de Maillard suffisante pour conférer aux aliments un caractère doré et craquant, sont fonction des aliments, car les échanges de chaleur par convection-conduction sont limités par les caractéristiques des aliments eux-mêmes. Il en résulte qu'il est difficile de proposer un temps de préparation réduit. De plus, les caractéristiques de chauffage sont fonction de la tension d'alimentation, et l'encombrement de ces éléments de chauffage pour maintenir la puissance de chauffage augmente si on prévoit une alimentation à faible tension. Un dispositif de cuisson est également connu du document DE2102062A1.

Un but de la présente invention est de répondre aux inconvénients mentionnés ci-dessus de l'art antérieur et en particulier, tout d'abord, de proposer un appareil de cuisson par flux d'air chaud, mais qui offre des temps de préparation réduits.

Pour cela un premier aspect de l'invention concerne un appareil électrique de cuisson et/ou de réchauffage d'aliments selon la revendication 1.

L'appareil selon l'invention permet effectivement de réduire le temps de cuisson, car les moyens de chauffage qui chauffent le flux d'air, chauffent également les aliments par rayonnement, car ils sont agencés en regard de la sortie du flux d'air vers les aliments. En d'autres termes, les moyens de chauffage sont agencés pour pouvoir rayonner directement sur les aliments, afin que ces derniers reçoivent de la chaleur par conduction-convection de la part du flux d'air, mais également par rayonnement de la part des moyens de chauffage. La surface des aliments exposée à un rayonnement direct des moyens de chauffage cuit ainsi plus rapidement que si elle ne reçoit de la chaleur que du flux d'air. Le rayonnement thermique produit par cette portion des moyens de chauffage suit un trajet rectiligne sans obstacle depuis la portion émettrice pour chauffer directement les aliments dans la cuve, il n'y a ainsi pas de perte thermique, et les aliments cuits présentent une surface dorée et craquante.

Selon un mode de réalisation, les moyens de chauffage comprennent un fil résistif à nu agencé pour générer de la chaleur lors de la cuisson et/ou du réchauffage des aliments.

Selon cette mise en oeuvre, le fil chauffant est au moins en partie en regard de la sortie, ce qui va à l'encontre des préjugés de l'homme de l'art qui aura tendance à agencer ces éléments conducteurs de l'électricité loin de la sortie afin d'éviter un contact éventuel avec les aliments ou tout autre objet, à travers la sortie.

Selon l'invention, les moyens de chauffage comprennent :
- un premier élément chauffant avec un premier fil résistif monté sur un premier support et comprenant la portion agencée en regard de la sortie de la gaine de ventilation, et
- un deuxième support en forme d'ailette, agencé dans la gaine de ventilation en amont du premier élément chauffant, pour rediriger au moins une partie du flux d'air sur le premier élément chauffant.

Selon cette mise en oeuvre, le premier élément chauffant est correctement ventilé par le flux d'air redirigé par le deuxième support. Le deuxième support peut servir pour corriger une hétérogénéité du flux d'air, pour ventiler le premier élément de chauffage, il en résulte également que le premier élément de chauffage, correctement refroidi par le flux d'air redirigé, ne présentera pas de points chauds, ce qui lui garantit une durabilité importante.

Selon un mode de réalisation, le deuxième support forme un deuxième élément chauffant distinct du premier élément chauffant, avec un deuxième fil résistif monté sur le deuxième support.

Selon cette mise en oeuvre, les moyens de chauffage comprennent deux éléments chauffants distincts agencés dans la gaine de ventilation, et le deuxième élément chauffant redirige une partie du flux d'air sur le premier élément chauffant. Cette mise en oeuvre permet d'optimiser les échanges thermiques entre le flux d'air et le premier élément chauffant pour améliorer le rendement de l'appareil.

Selon un mode de réalisation, la partie du flux d'air dirigée sur le premier élément chauffant est dirigée sur la portion des moyens de chauffage rayonnant directement sur les aliments. Cette portion des moyens de chauffage en regard des aliments, donc proche de la sortie, se trouve dans une zone de ralentissement du flux (puisque la section de passage augmente brusquement à la sortie), et se trouve faiblement ventilée. La redirection d'une partie du flux d'air sur cette portion augmente le refroidissement, ce qui l'empêche de surchauffer.

Selon un mode de réalisation, le deuxième support comprend des ouvertures pour laisser passer une partie du flux d'air. Ces ouvertures permettent de régler la répartition du flux d'air entre les faces du deuxième support, afin par exemple d'améliorer l'homogénéité des caractéristiques d'écoulement dans la gaine de ventilation.

Selon un mode de réalisation, le premier support et le deuxième support sont réalisés en céramique.

Selon un mode de réalisation, l'appareil comprend un ventilateur agencé pour créer le flux d'air pendant la cuisson et/ou le réchauffage, et la gaine de ventilation forme une conduite avec des parois pleines conduisant le flux d'air depuis le ventilateur jusqu'à la sortie.

Selon un mode de réalisation, la sortie de la gaine de ventilation est agencée au dessus de la cuve.

Selon un mode de réalisation, l'appareil comprend un couvercle agencé pour fermer un espace de cuisson au dessus de la cuve, et une partie de la gaine de ventilation est agencée dans le couvercle.

Selon un mode de réalisation, l'appareil comprend des moyens de brassage agencés pour enduire automatiquement lesdits aliments d'une pellicule de matière grasse par brassage desdits aliments avec de la matière grasse.

Selon un mode de réalisation, les moyens de brassage comprennent au moins une pale.

Selon un mode de réalisation, l'appareil forme une friteuse à cuisson sèche.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une coupe générale d'un appareil selon l'invention ;
- la figure 2 représente un détail de la gaine de ventilation de l'appareil de la figure 1 ;
- la figure 3 représente la gaine de la figure 2, lors du fonctionnement de l'appareil.

Conformément à l'invention, l'appareil est un appareil domestique c'est-à-dire spécifiquement conçu et dimensionné pour un usage domestique, par exemple dans le cadre familial. A ce titre, l'appareil peut être manipulé à la main par son utilisateur, par exemple pour être déplacé d'un placard à un plan de travail. En d'autres termes, l'appareil présente préférentiellement un caractère portable

L'appareil conforme à l'invention est préférentiellement conçu et dimensionné pour cuire et/ou chauffer des aliments particulaires tels que des morceaux de pommes de terre.

Le concept général de l'appareil selon l'invention autorise une grande polyvalence en matière de modes de cuisson, de sorte que le terme cuire employé ici recouvre différents modes de traitement des aliments, comme par exemple la friture, le rissolage, le rôtissage, ou le brunissage.

Dans une variante préférentielle de réalisation, qui correspond aux exemples illustrés aux figures, l'appareil conforme à l'invention est préférentiellement conçu et dimensionné pour assurer un traitement thermique des aliments destiné à leur conférer des qualités gustatives sensiblement équivalentes ou proches de celles d'aliments frits, et notamment d'aliments frits dans un bain d'huile. Dans cette variante, l'appareil conforme à l'invention constitue donc une friteuse, et plus particulièrement une friteuse à cuisson sèche. Par cuisson sèche, on désigne ici un mode de cuisson d'aliments sans immersion de ces derniers dans un bain d'huile ou de matière grasse, que cette immersion soit partielle et/ou temporaire pendant le cycle de cuisson.

L'expression cuisson sèche désigne au contraire une cuisson dans laquelle les aliments sont certes mouillés par un médium de cuisson (huile par exemple), mais sans pour autant être plongés ou baigner dans ledit médium. En cela, le principe de fonctionnement de la friteuse conforme à l'invention diffère de celui d'une friteuse classique à bain d'huile, puisqu'il permet en particulier de réunir des conditions propres à l'établissement d'une réaction de Maillard suffisante pour conférer aux aliments le caractère doré et craquant propre aux aliments frits sans que lesdits aliments n'aient pour autant été plongés complètement et directement dans un bain d'huile brûlante.

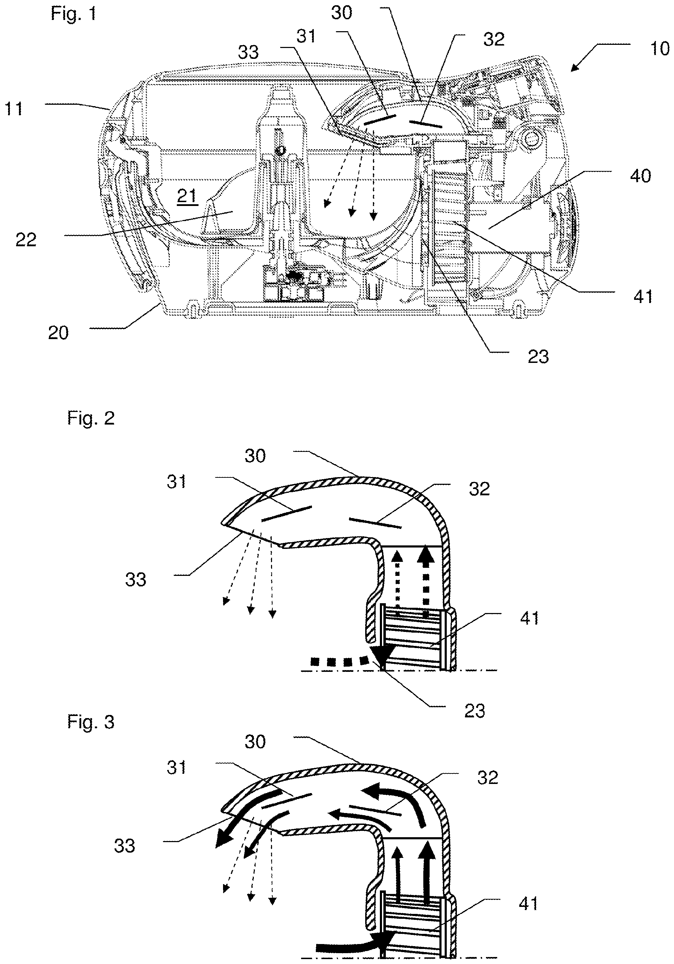

La figure 1 représente une vue en coupe d'un appareil 10 formant une friteuse à cuisson sèche avec un couvercle 11 et un boîtier 20. Le boîtier 20 comprend une cuve 21 de cuisson dans laquelle se trouve une pale 22 de brassage agencée de manière amovible dans la cuve 21 pour tourner autour d'un axe de rotation, afin de brasser et retourner les aliments en cours de cuisson et/ou réchauffage. Afin de cuire et/ou réchauffer les aliments dans la cuve 21, l'appareil 10 comprend un circuit de chauffage avec un ventilateur formé par une roue à aubes 41 entraînée en rotation par un moteur électrique 40, qui créé un flux d'air dans une gaine 30 de ventilation dans laquelle sont agencés un premier élément chauffant 31 et un deuxième élément chauffant 32. Afin d'envoyer le flux d'air sur les aliments situés au fond de la cuve 21, la gaine 30 de ventilation comprend une sortie 33 au dessus de la cuve 21. Lors du fonctionnement, les deux éléments de chauffage 31 et 32 sont baignés par le flux d'air qu'ils chauffent par convection et rayonnement. De plus, le premier élément de chauffage 31 présente une portion agencée proche de la sortie 33 de sorte que cette portion est directement en regard des aliments au fond de la cuve 21. Il en résulte que le rayonnement émis par cette portion du premier élément de chauffage se propageant en ligne droite arrivera directement sur les aliments. On obtient un chauffage direct par rayonnement, en plus de celui par conduction-convection fourni par le flux d'air. Les flèches représentées en pointillés schématisent ce mode de chauffage par rayonnement direct de la portion du premier élément de chauffage 31 sur des aliments dans la cuve 21.

La figure 2 représente une portion du circuit de ventilation. La roue à aubes 41 est agencée pour aspirer de l'air par une grille 23 agencée sur le côté de la cuve et le souffler dans la gaine 30 de ventilation. Comme le montrent les deux flèches en pointillés au dessus de la roue à aubes 41, le flux d'air dans la gaine 30 n'est pas homogène, il est plus important du côté extérieur du coude de la gaine 30 de ventilation. Le premier et le deuxième élément de chauffage 31 et 32 sont agencés dans la gaine 30 de ventilation. Ils sont chacun constitués d'un fil résistif à nu enroulé sur un support, en céramique par exemple.

La figure 3 représente la gaine 30 de ventilation parcourue par un flux d'air lors du fonctionnement de l'appareil 10. Le deuxième élément chauffant 32, placé en amont du premier élément chauffant 31 redirige une partie du flux d'air parcourant la gaine 30 de ventilation, afin de ventiler correctement la face inférieure du premier élément chauffant 31. Un refroidissement efficace de cette face inférieure est obtenu, ce qui permet d'éviter des points de surchauffe. De ce fait, il est possible d'approcher une portion du premier élément chauffant 31 vers la sortie 33, pour qu'elle rayonne directement sur les aliments dans la cuve 21, ce qui permet de réduire le temps de cuisson tout en obtenant des aliments dorés et craquants en surface, grâce au chauffage direct par rayonnement.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil (10) électrique de cuisson et/ou de réchauffage d'aliments comprenant :
- un boîtier (20) avec une cuve (21) de cuisson agencée pour recevoir les aliments à cuire et/ou à réchauffer,
- un circuit de chauffage par ventilation comprenant une gaine (30) de ventilation avec une sortie (33) agencée pour diriger un flux d'air sur les aliments à cuire et/ou à réchauffer,
- des moyens de chauffage agencés dans la gaine (30) de ventilation pour chauffer le flux d'air par rayonnement et par convection,
au moins une portion des moyens de chauffage étant agencée par rapport à la sortie (33) de la gaine (30) de ventilation de sorte à ce que le rayonnement thermique produit par cette portion des moyens de chauffage chauffe directement les aliments à cuire et/ou à réchauffer,
**caractérisé en ce que** les moyens de chauffage comprennent :
- un premier élément chauffant (31) avec un premier fil résistif monté sur un premier support et comprenant la portion agencée en regard de la sortie (33) de la gaine (30) de ventilation, et
- un deuxième support en forme d'ailette, agencé dans la gaine (30) de ventilation en amont du premier élément chauffant (31), pour rediriger au moins une partie du flux d'air sur le premier élément chauffant (31).

2. Appareil (10) selon la revendication 1, **caractérisé en ce que** les moyens de chauffage comprennent un fil résistif à nu agencé pour générer de la chaleur lors de la cuisson et/ou du réchauffage des aliments.

3. Appareil (10) selon la revendication 1 ou 2, **caractérisé en ce que** le deuxième support forme un deuxième élément chauffant (32) distinct du premier élément chauffant (31), avec un deuxième fil résistif monté sur le deuxième support.

4. Appareil (10) selon l'une des revendications 1 à 3, **caractérisé en ce que** la partie du flux d'air dirigée sur le premier élément chauffant (31) est dirigée sur la portion des moyens de chauffage rayonnant directement sur les aliments.

5. Appareil (10) selon l'une des revendications 1 à 4, **caractérisé en ce que** le deuxième support comprend des ouvertures pour laisser passer une partie du flux d'air.

6. Appareil (10) selon l'une des revendications 1 à 5, **caractérisé en ce que** le premier support et le deuxième support sont réalisés en céramique.

7. Appareil (10) selon l'une des revendications 1 à 6, **caractérisé en ce qu'**il comprend un ventilateur (41) agencé pour créer le flux d'air pendant la cuisson et/ou le réchauffage, et **en ce que** la gaine (30) de ventilation forme une conduite avec des parois pleines conduisant le flux d'air depuis le ventilateur (41) jusqu'à la sortie (33).

8. Appareil (10) selon l'une des revendications 1 à 7, **caractérisé en ce que** la sortie (33) de la gaine (30) de ventilation est agencée au-dessus de la cuve (21).

9. Appareil (10) selon l'une des revendications 1 à 8, **caractérisé en ce qu'**il comprend un couvercle (11) agencé pour fermer un espace de cuisson au-dessus de la cuve (21), et **en ce qu'**une partie de la gaine (30) de ventilation est agencée dans le couvercle (11).

10. Appareil (10) selon l'une des revendications 1 à 9, **caractérisé en ce qu'**il comprend des moyens de brassage agencés pour enduire automatiquement lesdits aliments d'une pellicule de matière grasse par brassage desdits aliments avec de la matière grasse.

11. Appareil (10) selon la revendication 10, **caractérisé en ce que** les moyens de brassage comprennent au moins une pale (22).

12. Appareil (10) selon l'une des revendications 1 à 11, **caractérisé en ce qu'**il forme une friteuse à cuisson sèche.

## Patentansprüche

1. Elektrische Koch- und/oder Aufwärmeinrichtung (10) von Lebensmitteln, umfassend:
- ein Gehäuse (20) mit einem Kochbehälter (21), der angeordnet ist, um die zu kochenden und/oder aufzuwärmenden Lebensmittel aufzunehmen,
- einen Hitzekreislauf durch Lüftung, umfassend einen Lüftungskanal (30) mit einem Ausgang (33), der angeordnet ist, um einen Luftstrom auf die zu kochenden und/oder aufzuwärmenden Lebensmittel zu richten,
- Heizmittel, die im Lüftungskanal (30) angeordnet sind, um den Luftstrom durch Bestrahlung und durch Konvektion zu heizen,
wobei mindestens ein Abschnitt der Heizmittel in Bezug auf den Ausgang (33) des Lüftungskanals (30) so angeordnet sind, dass die durch diesen Abschnitt der Heizmittel erzeugte thermische Strahlung direkt die zu kochenden und/oder aufzuwärmenden Lebensmittel erhitzt,
**dadurch gekennzeichnet, dass** die Heizmittel umfassen:
- ein erstes heizendes Element (31) mit einem ersten Widerstandsdraht, auf einem ersten Träger angebracht und den Abschnitt umfassend, der dem Ausgang (33) des Lüftungskanals (30) zugewandt angeordnet ist, und
- einen zweiten Träger in Rippenform, der im Lüftungskanal (30) stromaufwärts vom ersten heizenden Element (31) angeordnet ist, um mindestens einen Teil des Luftstrom auf das erste heizende Element (31) umzuleiten.

2. Einrichtung (10) nach Anspruch 1, **dadurch gekennzeichnet, dass** die Heizmittel einen freiliegenden Widerstandsdraht umfassen, der angeordnet ist, um beim Kochen und/oder Aufwärmen der Lebensmittel Hitze zu erzeugen.

3. Einrichtung (10) nach Anspruch 1 oder 2, **dadurch gekennzeichnet, dass** der zweite Träger ein zweites heizendes Element (32) bildet, das unterschiedlich ist vom ersten heizenden Element (31), mit einem zweiten Widerstandsdraht, der auf dem zweiten Träger angebracht ist.

4. Einrichtung (10) nach einem der Ansprüche 1 bis 3, **dadurch gekennzeichnet, dass** der Teil des Luftstroms, der auf das erste heizende Element (31) gerichtet wird, auf den Abschnitt der Heizmittel gerichtet wird, der direkt auf die Lebensmittel strahlt.

5. Einrichtung (10) nach einem der Ansprüche 1 bis 4, **dadurch gekennzeichnet, dass** der zweite Träger Öffnungen umfasst, um einen Teil des Luftstroms durchströmen zu lassen.

6. Einrichtung (10) nach einem der Ansprüche 1 bis 5, **dadurch gekennzeichnet, dass** der erste Träger und der zweite Träger aus Keramik hergestellt sind.

7. Einrichtung (10) nach einem der Ansprüche 1 bis 6, **dadurch gekennzeichnet, dass** sie einen Lüfter (41) umfasst, der angeordnet ist, um den Luftstrom während des Kochens und/oder des Aufwärmens zu erzeugen, und dadurch, dass der Lüftungskanal (30) eine Leitung mit Vollwänden bildet, die den Luftstrom vom Lüfter (41) bis zum Ausgang (33) leitet.

8. Einrichtung (10) nach einem der Ansprüche 1 bis 7, **dadurch gekennzeichnet, dass** der Ausgang (33) des Lüftungskanals (30) über dem Behälter (21) angeordnet ist.

9. Einrichtung (10) nach einem der Ansprüche 1 bis 8, **dadurch gekennzeichnet, dass** sie einen Deckel (11) umfasst, der angeordnet ist, um einen Kochraum über dem Behälter (21) zu schließen, und dadurch, dass ein Teil des Lüftungskanals (30) im Deckel (11) angeordnet ist.

10. Einrichtung (10) nach einem der Ansprüche 1 bis 9, **dadurch gekennzeichnet, dass** sie Mischmittel umfasst, die angeordnet sind, um die Lebensmittel automatisch mit einer dünnen Fettschicht zu überziehen durch Mischen der Lebensmittel mit dem Fett.

11. Einrichtung (10) nach Ansprüche 10, **dadurch gekennzeichnet, dass** die Mischmittel mindestens eine Rührschaufel (22) umfassen.

12. Einrichtung (10) nach einem der Ansprüche 1 bis 11, **dadurch gekennzeichnet, dass** sie eine Trockengarfritteuse bildet.

## Claims

1. Electric apparatus (10) for cooking and/or reheating food comprising:
- a housing (20) with a cooking tray (21) arranged such as to receive the food to be cooked and/or reheated,
- a circuit for heating by ventilation comprising a ventilation sleeve (30) with an outlet (33) arranged to direct an air flow onto the food to be cooked and/or reheated,
- heating means arranged in the ventilation sleeve (30) to heat the air flow by radiation and by convection,
at least one portion of the heating means is arranged relative to the outlet (33) of the ventilation sleeve (30) in such a way that the heat radiation produced by this portion of the heating means directly heats the food to be cooked and/or reheated,
**characterised in that** the heating means comprise:
- a first heating element (31) with a first resistive wire mounted on a first support and comprising the portion arranged facing the outlet (33) of the ventilation sleeve (30), and
- a second support in the form of a fin, arranged in the ventilation sleeve (30) upstream of the first heating element (31), in order to direct at least one portion of the air flow onto the first heating element (31).

2. Apparatus (10) according to claim 1, **characterised in that** the heating means comprise a bare resistive wire arranged to generate heat during the cooking and/or reheating of food.

3. Apparatus (10) according to claim 1 or 2, **characterised in that** the second support forms a second heating element (32) separate from the first heating element (31), with a second resistive wire mounted on the second support.

4. Apparatus (10) according to any of the claims 1 to 3, **characterised in that** the portion of the air flow directed onto the first heating element (31) is directed onto the portion of the heating means radiating directly on the food.

5. Apparatus (10) according to any of the claims 1 to 4, **characterised in that** the second support comprises openings in order to allow a portion of the air flow to pass.

6. Apparatus (10) according to any of the claims 1 to 5, **characterised in that** the first support and the second support are made of ceramic.

7. Apparatus (10) according to any of the claims 1 to 6, **characterised in that** it comprises a fan (41) arranged to create the air flow during the cooking and/or the reheating, and **in that** the ventilation sleeve (30) forms a duct with solid walls conveying the air flow from the fan (41) to the outlet (33).

8. Apparatus (10) according to any of the claims 1 to 7, **characterised in that** the outlet (33) of the ventilation sleeve (30) is arranged above the tray (21).

9. Apparatus (10) according to any of the claims 1 to 8, **characterised in that** it comprises a cover (11) arranged to close a cooking space above the tray (21), and **in that** a portion of the ventilation sleeve (30) is arranged in the cover (11).

10. Apparatus (10) according to any of the claims 1 to 9, **characterised in that** it comprises stirring means arranged to automatically coat said food with a film of fat by stirring of said food with fat.

11. Apparatus (10) according to claim 10, **characterised in that** the stirring means include at least one blade (22).

12. Apparatus (10) according to any of the claims 1 to 11, **characterised in that** it forms a fryer with dry cooking.
